# EUROPEAN PATENT SPECIFICATION

(11) **EP 3 972 384 B1**
(45) Date of publication and mention of the grant of the patent: **30.08.2023**
(21) Application number: 19931468.3
(22) Date of filing: 04.11.2019
(51) Int. Cl.: H04W 88/06, H04W 60/00, H04W 8/18, H04W 68/00

(54) **SERVICE PRIORITIZATION WHEN PAGING A MULTI-SIM DEVICE**
DIENSTPRIORISIERUNG BEIM PAGING EINES MULTI-SIM-GERÄTS
HIÉRARCHISATION DE SERVICES DURANT LA RADIOMESSAGERIE D'UN DISPOSITIF MULTI-SIM

(30) Priority: 24.05.2019 WO PCT/CN2019/088434
(43) Date of publication of application: 23.03.2022
(60) Divisional application: 23187112.0
(73) Proprietor: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN); LIU, Jianhua, Dongguan, Guangdong 523860 (CN); YANG, Ning, Dongguan, Guangdong 523860 (CN); WANG, Shukun, Dongguan, Guangdong 523860 (CN)
(74) Representative: Taor, Simon Edward William
(86) International application number: PCT/CN2019/115428
(87) International publication number: WO 2020/238018

(56) References cited:
- US-A1- 2017 359 800
- INTEL ET AL: "Paging cause introduction", 3GPP DRAFT; S2-1812346_23401_CR3484_PAGINGCAUSE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. West Palm Beach, FL, US; 20181126 - 20181130 20 November 2018 (2018-11-20), XP051563859, Retrieved from the Internet: URL:http://www.3gpp.org/ftp/Meetings%5F3GP P%5FSYNC/SA2/Docs/S2%2D1812346%2Ezip [retrieved on 2018-11-20]
- NOKIA ET AL: "Text Proposal for Xn Paging Priority", 3GPP DRAFT; R3-174521_TPPAGINGPRIORITY_423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Reno, USA; 20171127 - 20171201 17 November 2017 (2017-11-17), XP051373304, Retrieved from the Internet: URL:http://www.3gpp.org/ftp/tsg%5Fran/WG3% 5FIu/TSGR3%5F98/Docs/ [retrieved on 2017-11-17]

## Description

### TECHNICAL FIELD

The present disclosure relates to communication technology, and more particularly, to a wireless communication method and device.

### BACKGROUND

Currently, there are more and more terminal devices supporting dual-card dual-standby. However, current terminal devices do not support real dual-connection. That is, a terminal device cannot use two Universal Subscriber Identity Module (USIM) cards to perform uplink and downlink data services on two networks, which means that the terminal device can only perform services on one USIM card at a certain time.

For a terminal device equipped with both a USIM-1 card and a USIM-2 card, there may be the following problem. If the terminal device receives a paging request transmitted by a network corresponding to the USIM-2 card when performing data services on the USIM-1 card, does it need to switch to the USIM-2 card? Therefore, whether the terminal device is to switch to the USIM-2 card to perform services or to stay on the USIM-1 card to continue with the current services is a problem to be solved. US2017/359800A1 discloses a paging method for use in a network access device. 3GPP draft S2-1812346 from INTEL ET AL: "Paging cause introduction" discloses a feature of Paging Policy Differentiation. 3GPP draft R3-174521 from NOKIA ET AL: "Text Proposal for Xn Paging Priority" provides a purpose of the RAN Paging procedure and a successful operation and an unsuccessful operation thereof.

### SUMMARY

The present disclosure provides a wireless communication method and device, and provides a solution for a terminal device to determine whether to perform SIM card switching.

The invention is set out in the appended set of claims.

In a first aspect, a wireless communication method performed by a terminal device which supports a plurality of Universal Subscriber Identity Module, USIM, cards is provided as set out in claim 1. Optional features are set out in claims 2 to 3.

In a second aspect, a wireless communication method is provided as set out in claim 4.

In a third aspect, a terminal device supporting a plurality of Universal Subscriber Identity Module, USIM, cards is provided as set out in claim 5. Optional features are set out in claims 6 to 8.

In a fourth aspect, a network device is provided as set out in claim 9.

According to the technical solutions provided by the embodiments of the present disclosure, when a terminal device receives a first message transmitted by a first network, it can determine whether to establish a connection with the first network based on service information in the first message or an instruction from the first network. This way of determination can reduce the complexity of the terminal device.

### BRIEF DESCRIPTION OF DRAWINGS

FIG. 1 is a schematic diagram of a wireless communication system in which an embodiment of the present disclosure can be applied.
FIG. 2 is a schematic flowchart illustrating a wireless communication method.
FIG. 3 is a schematic flowchart illustrating another wireless communication method according to an embodiment of the present disclosure.
FIG. 4 is a schematic flowchart illustrating another wireless communication method according to an embodiment of the present disclosure.
FIG. 5 is a schematic flowchart illustrating another wireless communication method according to an embodiment of the present disclosure.
FIG. 6 is a schematic flowchart illustrating another wireless communication method according to an embodiment of the present disclosure.
FIG. 7 is a schematic flowchart illustrating another wireless communication method according to an embodiment of the present disclosure.
FIG. 8 is a schematic flowchart illustrating another wireless communication method according to an embodiment of the present disclosure.
FIG. 9 is a schematic flowchart illustrating another wireless communication method according to an embodiment of the present disclosure.
FIG. 10 is a schematic block diagram of a terminal device according to an embodiment of the present disclosure.
FIG. 11 is a schematic block diagram of another terminal device according to an embodiment of the present disclosure.
FIG. 12 is a schematic block diagram of a network device according to an embodiment of the present disclosure.
FIG. 13 is a schematic block diagram of another network device according to an embodiment of the present disclosure.
FIG. 14 is a schematic diagram showing a structure of a communication device according to an embodiment of the present disclosure.
FIG. 15 is a schematic diagram showing a structure of an apparatus according to an embodiment of the present disclosure.
FIG. 16 is a schematic block diagram of a communication system according to an embodiment of the present disclosure.

### DESCRIPTION OF EMBODIMENTS

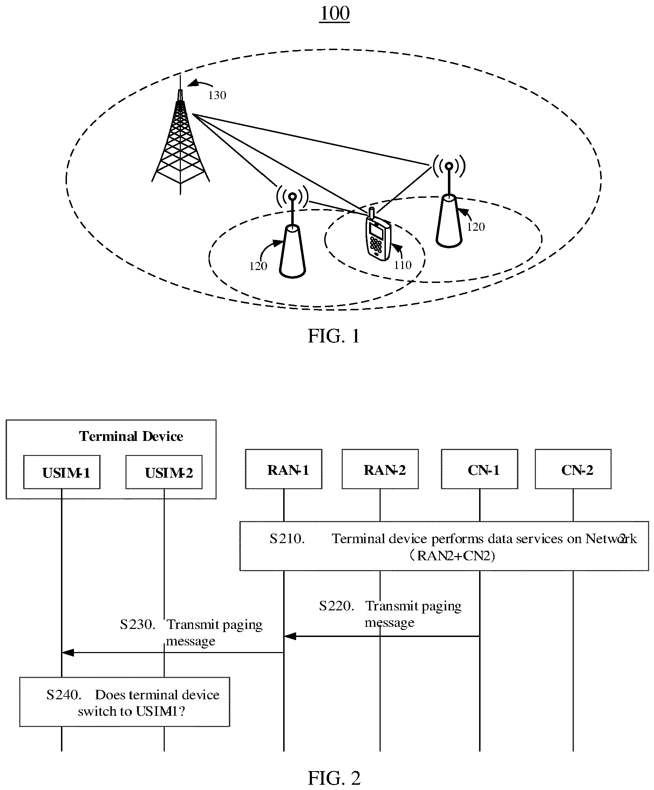

FIG. 1 is a schematic diagram showing a system 100 according to an embodiment of the present disclosure.

As shown in FIG. 1, a terminal device 110 is connected to a first network device 130 in a first communication system and a second network device 120 in a second communication system. For example, the first network device 130 may be a network device in Long Term Evolution (LTE), and the second network device 120 may be a network device in New Radio (NR).

Here, each of the first network device 130 and the second network device 120 may cover a plurality of cells.

It can be appreciated that FIG. 1 is an example of a communication system according to an embodiment of the present disclosure, and the embodiment of the present disclosure is not limited to the communication system shown in FIG. 1.

As an example, the communication system to which the embodiment of the present disclosure is applicable may include at least a plurality of network devices in the first communication system and/or a plurality of network devices in the second communication system.

For example, the system 100 shown in FIG. 1 may include one primary network device in the first communication system and at least one secondary network device in the second communication system. Each of the at least one secondary network device is connected to the one primary network device to form a plurality of connections, and is connected to the terminal device 110 to provide services for the terminal device 110. In particular, the terminal device 110 may simultaneously establish connections via the primary network device and the secondary network device.

Optionally, the connection established between the terminal device 110 and the primary network device is a primary connection, and the connection established between the terminal device 110 and the secondary network device is a secondary connection. Control signaling for the terminal device 110 may be transmitted via the primary connection, and data for the terminal device 110 may be transmitted via both the primary connection and the secondary connection, or may be transmitted via the secondary connection only.

As another example, the first communication system and the second communication system in the embodiment of the present disclosure may be different, but the embodiment of the present disclosure is not limited to any specific types of the first communication system and the second communication system.

For example, the first communication system and the second communication system may be any of various communication systems, including for example: Global System of Mobile Communication (GSM), Code Division Multiple Access (CDMA) system, Wideband Code Division Multiple Access (WCDMA) system, General Packet Radio Service (GPRS), Long Term Evolution (LTE) system, LTE Time Division Duplex (TDD) system, or Universal Mobile Telecommunication System (UMTS).

Each of the primary network device and the secondary network device may be any access network device.

Optionally, in some embodiments, the access network device may be a base station such as Base Transceiver Station (BTS) in a GSM system or a CDMA system, a base station such as NodeB (NB) in a WCDMA system, or a base station such as Evolutional Node B (eNB or eNodeB) in an LTE system.

Alternatively, the access network device may be a base station such as a gNB in a Next Generation Radio Access Network (NG RAN) or NR system, or a radio controller in a Cloud Radio Access Network (CRAN). Alternatively, the access network device may be a relay station, an access point, a vehicle-mounted device, a wearable device, or a network device in a future evolved Public Land Mobile Network (PLMN).

In the system 100 shown in FIG. 1, as an example, the first network device 130 may be the primary network device, and the second network device 120 may be the secondary network device.

The first network device 130 may be an LTE network device, and the second network device 120 may be an NR network device. Alternatively, the first network device 130 may be an NR network device, and the second network device 120 may be an LTE network device. Alternatively, both the first network device 130 and the second network device 120 may be NR network devices. Alternatively, the first network device 130 may be a GSM network device, a CDMA network device, or the like, and the second network device 120 may also be a GSM network device, a CDMA network device, or the like. Alternatively, the first network device 130 may be a macrocell base station, and the second network device 120 may be a microcell base station, a picocell base station, a femtocell base station, or the like.

Optionally, the terminal device 110 may be any terminal device. The terminal device 110 may include, but not limited to, an apparatus connected via a wired line, e.g., via a Public Switched Telephone Network (PSTN), a Digital Subscriber Line (DSL), a digital cable, or a direct cable connection, and/or via another data connection/network, and/or via a wireless interface, e.g., for a cellular network, a Wireless Local Area Network (WLAN), a digital TV network such as a Digital Video Broadcasting Handheld (DVB-H) network, a satellite network, an Amplitude Modulation-Frequency Modulation (AM-FM) broadcast transmitter, and/or via another terminal device, and configured to receive/transmit communication signals, and/or an Internet of Things (IoT) device. A terminal device configured to communicate via a wireless interface may be referred to as a "wireless communication terminal", a "wireless terminal", or a "mobile terminal". Examples of the mobile terminal may include, but not limited to, a satellite or cellular phone, a Personal Communications System (PCS) terminal combining cellular radio phone with data processing, fax, and data communication capabilities, a Personal Digital Assistant (PDA) including a radio phone, a pager, Internet/intranet access, a Web browser, a memo pad, a calendar, and/or a Global Positioning System (GPS) receiver, or a conventional laptop and/or palmtop receiver or another electronic device including a radio telephone transceiver. The terminal device may be an access terminal, a User Equipment (UE), a user unit, a user station, a mobile station, a mobile terminal, a remote station, a remote terminal, a mobile device, a user terminal, a terminal, a wireless communication device, a user agent, or a user device. Alternatively, the access terminal can be a cellular phone, a cordless phone, a Session Initiation Protocol (SIP) phone, a Wireless Local Loop (WLL) station, a PDA, a handheld device or a computing device having a wireless communication function, another processing device connected to a wireless modem, a vehicle-mounted device, a wearable device, a terminal device in a 5G network, or a terminal devices in a future evolved PLMN, etc.

It is to be noted that the terms "system" and "network" are often used interchangeably herein.

Terminals with dual SIM cards represent a future development trend. However, current terminals generally do not support real dual-connection capabilities. Dual-connection can be understood as dual-transmission and dual-reception, i.e., simultaneous transmission and reception of data on two networks. Therefore, terminal devices cannot simultaneously perform uplink (UL) and downlink (DL) data services on two networks using two SIM cards.

Generally, most of the current terminal devices can only support Single UL/DL, or Single UL/Dual DL, which means that the terminal devices can only perform services on one SIM card at a certain time. Here, Single UL/DL means that a terminal device can only perform uplink and downlink services on one SIM card at a certain time, whereas Single UL/Dual DL means that a terminal device can simultaneously perform services on two SIM cards but can only perform uplink services on one SIM card at a certain time.

If a terminal device is equipped with both a SIM-1 card and a SIM-2 card, when the terminal device only supports Single UL/DL or Single UL/Dual DL, there will be the following problems.

Case 1: If the terminal device only supports Single UL/DL, and the terminal device is in a Radio Resource Control (RRC) idle state or RRC non-connected state on both SIM-1 and SIM-2, there will be a paging conflict.

Case 2: If the terminal device only supports Single UL/DL, and the terminal device is in the RRC idle state or non-connected state on SIM-1, and in an RRC connected state on SIM-2, there will be a phenomenon that a low-priority service on SIM-1 may interrupt a high-priority service on SIM-2, or the terminal device cannot receive paging for the service on SIM-1 in some events.

Case 3: If the terminal device only supports Single UL/Dual DL, and the terminal device is in the RRC idle or non-connected state on SIM-1, and in the RRC connected state on SIM-2, the terminal device will respond to paging on SIM-1 (such as RRC connection establishment) and thus interrupt the service on SIM-2.

In view of the above cases, as shown in FIG. 2, a terminal device is equipped with two SIM cards, USIM-1 and USIM-2. The USIM-1 card of the terminal device corresponds to Network 1, and the USIM-2 card of the terminal device corresponds to Network 2. Network 1 includes Access Network 1 (e.g., Radio Access Network 1, or RAN-1) and Core Network 1 (CN-1), and Network 2 includes RAN-2 and CN-2.

At S210, the terminal device is in a connected state with Network 2 and is in a non-connected state with Network 1. The terminal device performs a data service on USIM-2 on Network 2 (RAN-2+CN-2).

At S220, in response to triggering of a service on Network 1, CN-1 transmits a paging request to RAN-1 to request the terminal device to establish a connection with Network 1.

At S230, after receiving the paging request transmitted by CN-1, RAN-1 transmits the paging request to the terminal device.

After the terminal device receives the paging request transmitted by RAN-1, does it switch to USIM-2? For example, if the terminal device is performing a service, such as a voice service, on Network 2 when receiving the paging request, does the terminal device need to switch to USIM-1? Therefore, whether the terminal device should stop the service on Network 1 and switch to SIM-2, or ignore the paging of Network 1 and maintain the connection with Network 1 to continue the current service is a problem that needs to be solved.

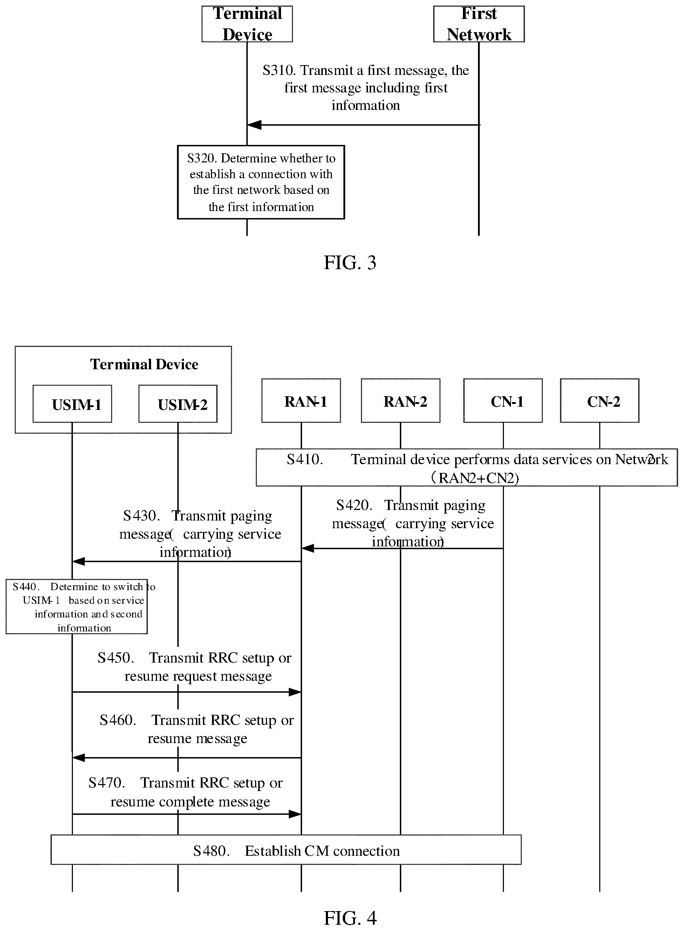

An embodiment of the present disclosure provides a communication method, which provides a scheme for a terminal device supporting multiple SIM cards to determine whether to perform SIM card switching. As shown in FIG. 3, the method includes steps S310 to S320.

At S310, a first network transmits a first message to a terminal device. The first message includes first information, and the first message is used to request the terminal device to establish a connection with the first network.

At S320, the terminal device determines whether to establish the connection with the first network based on the first information.

The first network may refer to a first network device. The first network device may refer to a core network device, e.g., CN-1 as described above. Alternatively, the first network device may refer to an access network device, e.g., RAN-1 as described above.

The terminal device is in a non-connected state with the first network. For example, the terminal device may be in an RRC idle state in the first network, or the terminal device may be in an RRC inactive state in the first network.

The terminal device can be a terminal device that supports multiple SIM cards. It is assumed that the SIM cards installed in the terminal device include USIM-1 corresponding to the first network and USIM-2 corresponding to a second network. The terminal device is currently in a connected state with the second network, but is in a non-connected state with the second network.

When the terminal device is in the connected state with the second network, the terminal device can perform services on USIM-2. The terminal device being in the connected state with the second network may include the terminal device being in an RRC connected state and/or a Connection Management (CM) connected state with the second network.

The first message may be a paging message. When the first network detects that there is a service that needs to trigger paging, it can transmit a paging message to the terminal device so as to make the terminal device process the service. For example, when the first network detects an application data packet or a request message triggered by a third party, it can transmit a paging message to the terminal device.

The first information may include service information, such that the terminal device can determine whether to switch to the first network based on the service information. If the terminal device determines that the service is more important or urgent, for example, if the first information includes information such as earthquake or tsunami warning, the terminal device can switch to the first network to process the service. If the terminal device determines that the service is not important or urgent, for example, if it is a spam message or an advertisement, the terminal device can ignore the message and continue staying on the current network.

The service information may include a service identifier, which may indicate a service that triggers the first network to transmit the first message.

The service identifier can be implemented by at least one of: an Application Identity (ID), a Service ID, an Internet Protocol (IP) address, a Media Access Control (MAC) address, a Virtual Local Area Network (VLAN) ID, a Data Network Name (DNN), and an Access Point Name (APN).

The service identifier can also represent different service types, such as emergency call, voice service, short message service, and IP Multimedia Subsystem (IMS) service.

In addition, the first information may also include the service identifier and a priority corresponding to the service identifier. With the service triggering the first message and its corresponding priority in the first information, the terminal device can determine whether it is necessary to establish the connection with the first network based on the priority of the service triggering the first message.

Of course, the first message may also include a plurality of service identifiers and their corresponding priorities. Each service identifier has its corresponding priority. The priorities of different services may be same or different.

It can be appreciated that the first information is not limited to including the service information, and the first information may further include other information, such as a triggering event. The terminal device can determine whether it is required to establish the connection with the first network based on the triggering event.

In an embodiment of the present disclosure, the terminal device can autonomously determine whether it needs to switch to the first network based on the content in the first information, e.g., the service information. This provides a network switching policy for the terminal device supporting multiple SIM cards, which can reduce the complexity of the terminal device.

The terminal device may determine whether to establish the connection with the first network based on the first information and at least one of second information and an ongoing service of the terminal device in the second network.

The second information may be understood as a policy, and the second information may include at least one of: a service priority, a service that requires the terminal device to establish the connection with the first network, and a service that does not require the terminal device to establish the connection with the first network.

The second information may correspond to different information at different time and/or different locations. For example, the second information may include a service priority at different time and/or different locations, and the same service may have different priorities at different time and/or different locations. In another example, at different time and/or different locations, the service that requires the terminal device to establish the connection with the first network as included in the second information may be different.

The service priority may include different services and their corresponding service priorities, as shown in Table 1, which shows a scheme of representing a service priority.

**Table 1**

| Service | Priority (1-9) |
|---|---|
| Service-1 | 1 |
| Service-2 | 3 |
| Service-3 | 6 |
| Service-4 | 4 |

Table 1 shows four types of services and their corresponding priorities. The priority of Service-1 is 1, the priority of Service-2 is 3, the priority of Service-3 is 6, and the priority of Service-4 is 4. In Table 1, the smaller the value of the priority, the higher the priority level. That is, the priority of Service-1 is the highest, the priority of Service-3 is the lowest, and the priority of Service-2 is higher than that of Service-4.

In an embodiment of the present disclosure, the service priorities may include service priorities at specific time and/or service priorities at a specific location. That is, at different time and/or locations, the priority of the same service may be different, as shown in Table 2 and Table 3.

**Table 2**

| Service | Time | Priority (1-9) |
|---|---|---|
| Service 1 | Time 1 | 1 |
| | Time 2 | 3 |
| Service 2 | Time 1 | 4 |
| | Time 2 | 2 |
| Service 3 | Time 1 | 6 |
| | Time 2 | 7 |
| Service 4 | Time 1 | 8 |
| | Time 2 | 5 |

Table 2 shows service priorities of the same service at different time. For Service 1, the priority at Time 1 is 1, but the priority at Time 2 is 3. For Service 2, the priority at Time 1 is 4, but the priority at Time 2 is 2. For Service 3, the priority at Time 1 is 6, but the priority at Time 2 is 7. For Service 4, the priority at Time 1 is 8 and the priority at Time 2 is 5.

Referring to Table 2, at Time 1, the priority of Service 1 is higher than the priority of Service 2, but at Time 2, the priority of Service 2 is higher than the priority of Service 1. Therefore, when determining a priority of a service included in the first information, the terminal device may first determine the current time, and then use the priority corresponding to the time as the priority of the service.

Time 1 and Time 2 can represent day and night, respectively, or Time 1 and Time 2 may represent weekday and weekend, respectively. Of course, an embodiment of the present disclosure can also use more time points, for example, work time, off-work time, meal time, bed time, etc.

**Table 3**

| Service | Location | Priority (1-9) |
|---|---|---|
| Service 1 | Location 1 | 4 |
| | Location 2 | 2 |
| Service 2 | Location 1 | 1 |
| | Location 2 | 6 |
| Service 3 | Location 1 | 3 |
| | Location 2 | 5 |
| Service 4 | Location 1 | 7 |
| | Location 2 | 8 |

Table 3 shows priorities of the same service at two different locations. For Service 1, the priority at Location 1 is 4, but the priority at Location 2 is 2. For Service 2, the priority at Location 1 is 1, but the priority at Location 2 is 6. For service 3, the priority at Location 1 is 3, but the priority at Location 2 is 5. For service 4, the priority at Location 1 is 7, but the priority at Location 2 is 8.

Referring to Table 3, at Location 1, the priority of Service 1 is higher than the priority of Service 2, but at Location 2, the priority of Service 2 is higher than the priority of Service 1. Therefore, when determining a priority of a service included in the first information, the terminal device may first determine a location where the terminal device is located, and then determine the priority corresponding to the location as the priority of the service.

Location 1 and Location 2 may represent home and office, respectively. Of course, an embodiment of the present disclosure can also use more locations, for example, on high-speed train, on airplane, etc.

Table 1, Table 2, and Table 3 are exemplary only, with priorities in a range of 1-9 as an example, but the embodiment of the present disclosure is not limited to this. The priorities of the services can be divided in a finer manner, e.g., the priorities of the services may be divided into 20 levels, i.e., from 1 to 20.

It can be appreciated that the service priorities may also include priorities at specific time and specific locations. That is, the priority of the service may be related to both the time and the location, and the service priority is a priority in two dimensions. In this case, the service priority is the result of both Table 2 and Table 3. Table 2 may indicate the service priority at a certain location, and Table 3 may indicate the service priority at certain time.

For the same service, even for the same time, the priority may be different for different locations. When determining a priority of a service included in the first information, the terminal device shall not only determine the time of the terminal device, but also determine the location of the terminal device, and determine the priority of the service based on the time and location information of the terminal device.

The embodiment of the present disclosure is not limited to any specific granularity at which services are divided. For example, the services can be divided into at least one of the following:
IP Multimedia Subsystem (IMS) based voice services and non-IMS based voice services;
IMS based and non-IMS based Short Message Service (SMS) and Unstructured Supplementary Services Data (USSD);
IMS services other than voice and SMS; and
Other data services not listed above, such as video.

For ease of the description, one or more services that require the terminal device to establish the connection with the first network are referred to as a first service group, and one or more services that do not require the terminal device to establish the connection with the first network are referred to as a second service group. The second information may include the first service group only, the second service group only, or both the first service group and the second service group.

As an example, the terminal device may determine whether to establish the connection with the first network based on the first information and the second information. If the second information includes the service priority and the first information includes the service information, the terminal device may determine whether to establish the connection with the first network based on the priority of the service included in the first information and the service priority. If the second information includes the first service group, and the service included in the first information belongs to the first service group, the terminal device can establish the connection with the first network. If the second information includes the first service group, and the service included in the first information does not belong to the first service group, the terminal device may not establish the connection with the first network. If the second information includes the second service group, and the service included in the first information belongs to the second service group, the terminal device may not establish the connection with the first network. If the second information includes the second service group, the terminal device can establish the connection with the first network.

The terminal device can easily determine whether to establish the connection with the first network based on the service group to which the service included in the first information belongs. When the terminal device receives the first message transmitted by the first network, it only needs to determine to which service group the service included in the first information belongs, so as to directly determine whether it is required to establish the connection with the first network.

There are many ways for the terminal device to determine whether to establish the connection with the first network based on the priority of the service included in the first information and the service priority.

For example, the terminal device may determine whether to establish the connection with the first network based on a ranking or level of the priority of the service included in the first information in the service priority. If the service included in the first information has a relatively high ranking in the service priority, for example, above average, the terminal device may establish the connection with the first network. If the service included in the first information has a relatively low ranking in the service priority, for example, below average, the terminal device may not establish the connection with the first network.

In another example, the terminal device may determine whether to establish the connection with the first network based on the service included in the first information and the ongoing service of the terminal device in the second network. After receiving the first message, the terminal device can determine which of the service in the first information and the ongoing service in the second network is more important. If the service in the first information is more important, the terminal device can establish the connection with the first network. If the ongoing service of the terminal device in the second network is more important, for example, if the ongoing service in the second network is a call service, and the service in the first message is only an advertisement short message, and the terminal device may not establish the connection with the first network.

In yet another example, the terminal device may also determine whether to establish the connection with the first network based on the service included in the first information, the ongoing service of the terminal device in the second network, and the priorities of the services. In particular, the terminal device may determine whether to establish the connection with the first network based on the priority of the service included in the first information and the priority of the ongoing service of the terminal device in the second network. If the priority of the service included in the first information is higher than the priority of the ongoing service in the second network, the terminal device can establish the connection with the first network. If the priority of the service included in the first information is lower than the priority of the ongoing service in the second network, the terminal device may not establish the connection with the first network. If the priority of the service included in the first information is the same as the priority of the ongoing service in the second network, the terminal device may or may not establish the connection with the first network.

The terminal device can determine whether to perform SIM card switching by comparing the priorities of the services in two SIM cards in a flexible manner. By comparing the ongoing service in USIM-2 with the service requested in USIM-1, the more important or urgent service can be selected for processing, such that the terminal device can flexibly adjust the data processing policy.

In the embodiment of the present disclosure, the second information may be transmitted by the first network to the terminal device, or transmitted by the first network to the terminal device, or pre-configured in the terminal device, e.g., at manufacture.

If the second information is transmitted by the network device to the terminal device, the network device may transmit the second information to the terminal device in a registration process, a session establishment process, and/or a UE Configuration Update (UCU) process. For example, the second information may be carried in at least one of: a Registration Accept message, a Protocol Data Unit (PDU) session establishment accept message, a PDU session modification accept message, and a message in the UCU process.

The UCU process may be a UCU process triggered by an Access and Mobility Management Function (AMF), or a UCU process triggered by a Policy Control Function (PCF) network element.

The second information may be transmitted to the terminal device by a Session Management Function (SMF) network element, or may be transmitted to the terminal device by a PCF network element. The PCF network element transmitting the second information to the terminal device may mean that the PCF network element uses a container to transmit the second information transparently to the terminal device via an AMF network element.

The first network may also transmit the second information to the terminal device via the first message. For example, when the first network transmits a paging message to the terminal device, the second information may be carried in the paging message and transmitted to the terminal device.

The terminal device can determine whether it is required to establish the connection with the first network using any of the schemes described above. In the case where the terminal device determines that it is required to establish the connection with the first network, it can release the connection with the second network, or disconnect from the second network. For example, the terminal device can release an RRC connection and/or a CM connection with the second network.

If the terminal device is currently in the RRC connected state with the second network, when the terminal device determines to establish the connection with the first network, the terminal device may release the RRC connection with the second network. If the terminal device is currently in the CM connected state with the second network, when the terminal device determines to establish the connection with the first network, the terminal device may release the CM connection with the second network.

When the terminal device determines that it is required to establish the connection with the first network, it may transmit a first request message to the first network. The first request message is used to request establishment of an RRC connection with the first network. In particular, the terminal device may transmit the first request message to the first network using SIM-1.

Of course, if the terminal device supports the capability to perform data services on two SIM cards simultaneously, the terminal device may not release the connection with the second network and continue maintaining the connection with the second network.

The terminal device establishing the connection with the first network may include the terminal device establishing a connection with a first core network and/or the terminal device establishing a connection with a first access network.

The first request message may include an RRC connection setup request message and/or an RRC connection resume request message. If the terminal device is in an RRC idle state in the first network, the terminal device can transmit an RRC connection setup request message to the first network. If the terminal device is in the RRC disconnected state with the first network, the terminal device can transmit an RRC connection resume request message to the first network.

When the terminal device transmits the first request message to the first network, a cause value may be carried in the first request message, and the cause value is used to indicate a cause for which the terminal device requests to establish or restore the RRC connection.

The cause value may include e.g., SIM card switching and/or a specific service identifier. The SIM card switching means that the terminal device uses the current SIM card to initiate an RRC connection and may disconnect a connection with the network corresponding to a previous SIM card. The specific service identifier may include an identifier of the service included in the first information, and the specific service identifier may indicate that the terminal device is requesting the RRC connection due to arrival of the specific service.

The terminal device may also transmit a Non-Access Stratum (NAS) message to the first network to establish an NAS connection with the first network, such that the terminal device can enter the CM connected state.

After the terminal device enters the CM connected state, it can perform data services normally. That is, the terminal device can process data services on SIM-1.

The wireless communication method according to an embodiment of the present disclosure will be described in detail below with reference to FIG. 4. As shown in FIG. 4, the method includes steps S410- S480. For corresponding technical features in FIG. 4, reference can be made to the above description.

At S410, SIM-1 of a terminal device completes registration or attachment on a first network, and SIM-2 of the terminal device completes registration or attachment on a second network. The terminal device is currently in a CM connected state with the second network, and is in a non-connected state with the first network.

The first network may include RAN-1 and CN-1, and the second network may include RAN-2 and CN-2.

At S420, CN-1 detects that there is a service that needs to trigger a paging message, then CN-1 can transmit the paging message to RAN-1. There are two ways to trigger the paging message: 1) an application data packet and 2) a request message triggered by a third-party server.

The paging message may carry service information, such that the terminal device can determine whether to establish a connection with the first network based on the service information. The service information may include a service type and/or a service identifier.

At S430, after receiving the paging message transmitted by CN-1, RAN-1 can transmit the paging message to the terminal device.

At S440, after receiving the paging message, the terminal device can determine whether to establish the connection with the first network based on the service information included in the paging message and second information.

The second information may include at least one of: a service priority, a service that requires the terminal device to establish the connection with the first network, and a service that does not require the terminal device to establish the connection with the first network.

When the terminal device determines that it is required to establish the connection with the first network, it can disconnect from the second network and use USIM-1 to connect to the first network.

At S450, the terminal device can transmit a first request message to RAN-1. The first request message may be an RRC connection setup request message, or the first message may be an RRC resume request message.

If the terminal device is in an RRC idle state in RAN-1, the terminal device can transmit an RRC connection setup request message to RAN-1. If the terminal device is in an RRC inactive state in RAN-1, the terminal device can transmit an RRC resume request message to RAN-1.

When the terminal device transmits the first request message, a cause value may be carried in the first request message to indicate the cause for which the terminal device transmits the first request message. The cause value may include SIM card switching and/or an identifier of a specific service.

At S460, after receiving the RRC connection setup request message transmitted by the terminal device, RAN-1 can transmit an RRC setup message to the terminal device, or after receiving the RRC resume request message transmitted by the terminal device, RAN-1 can transmit an RRC resume message to the terminal device.

At S470, after receiving the RRC setup message, the terminal device can transmit an RRC setup complete message to RAN-1, or after receiving the RRC resume message transmitted by RAN-1, the terminal device may transmit an RRC resume complete message to RAN-1.

At S480, the terminal device initiates an NAS message to CN-1. For example, the terminal device can transmit a service request message or a registration request message to CN-1 to enter the CM connected state.

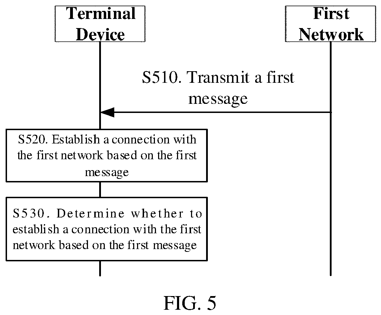

An embodiment of the present disclosure also provides another wireless communication method, which provides a scheme for a terminal device supporting multiple SIM cards to determine whether to perform SIM card switching. As shown in FIG. 5, the method includes steps S510 to S530.

Unlike the method shown in FIG. 3, in the method shown in FIG. 5, it is a network side that determines whether to perform SIM card switching, and a terminal device then establishes or does not establish a connection with a first network according to a decision of the network side, thereby minimizing the complexity of the terminal device. For corresponding technical features in the method shown in FIG. 5, reference can be made to the description of FIG. 3 and details thereof will be omitted for simplicity.

At S510, a first network transmits a first message to a terminal device.

The first network may refer to a first network device. The first network device may refer to a core network device, or may refer to an access network device.

The terminal device may be a terminal device that supports multiple SIM cards. The terminal device is currently in a non-connected state with the first network, which is a network corresponding to one of the multiple SIM cards.

For example, the terminal device may support USIM-1 corresponding to the first network and USIM-2 corresponding to a second network. The terminal device is currently in a non-connected state with the first network, but is in a connected state with the second network. That is, the terminal device can perform data services related to USIM-2 on the second network, but not data services related to USIM-1 on the first network.

After receiving the first message, the terminal device may perform step S520 or S530. Which step the terminal device is to perform is determined according to a switching policy on the network side.

The first message may be, for example, a paging message, but the embodiment of the present disclosure is not limited to this. The first network when triggered by a service may also transmit another message to the terminal device.

The first network when triggered by a service may transmit a paging message to the terminal device to request the terminal device to establish a connection with the first network. The first network transmitting the paging message to the terminal device may mean that the first network transmits the paging message to the terminal device when it is determined that the terminal device is required to establish the connection with the first network, or the first network transmits the paging message to the terminal device regardless of whether the terminal device is required to establish the connection with the first network.

The first network may determine whether the terminal device is required to establish the connection with the first network based on a first policy. The first policy may include at least one of: a service priority, a service that requires a first indication to be added to a paging message, and a service that does not require the first indication to be added to the paging message.

As an implementation, the first network can determine whether the terminal device is required to establish the connection with the first network based on the first policy and a service to be transmitted. The service to be transmitted can be understood as a service that triggers the first network device to transmit the paging message.

The first network may determine whether the terminal device is required to establish the connection with the first network based on a priority of the service to be transmitted. Alternatively, the first network may determine whether the terminal device is required to establish the connection with the first network based on whether the service to be transmitted belongs to one or more services that require the first indication to be added to the paging message.

Optionally, the service priority in the embodiment of the present disclosure may be used to identify a service that requires the terminal device to connect to the first network and/or a service that does not require the terminal device to connect to the first network.

For example, the service priorities can be used to indicate a first service list, and the first service group includes services that require the terminal device to connect to the first network (for example, the terminal needs to return to the connected state from the idle state or the RRC-Inactive state). If the service to be transmitted belongs to the first service list, the first network can determine that the terminal device is required to establish the connection with the first network. If the service to be transmitted does not belong to the first service group, the first network can determine that the terminal device is not required to establish the connection with the first network. In another example, the service priorities can be used to indicate a second service group including services that do not require the terminal device to connect to the first network. If the service to be transmitted belongs to the second service group, the first network can determine that the terminal device is not required to establish the connection with the first network. If the service to be transmitted does not belong to the first service group, the first network may determine that the terminal device is required to establish the connection with the first network. In yet another example, the service priorities can be used to indicate a first service group including services that require the terminal device to connect to the first network and a second service group including services that do not require the terminal device to connect to the first network. If the service to be transmitted belongs to the first service group, the first network can determine that the terminal device is required to establish the connection with the first network, and if the service to be transmitted belongs to the second service group, the first network can determine that terminal device is not required to establish the connection with the first network.

The first policy may correspond to different information at different time and/or different locations. For example, the first policy may include a service priority at different time and/or different locations, and the same service may have different priorities at different time and/or different locations. In another example, at different time and/or different locations, the services included in the second information that require the terminal device to establish the connection with the first network may be different.

The service priority may include a service priority at a specific location and/or a service priority at a specific time, and reference can be made to the above description for details.

In the embodiment of the present disclosure, the service can be represented by a service identifier.

In an embodiment of the present disclosure, the first network may determine the service to be transmitted based on a service identifier in a user plane data packet.

The service identifier can be added to a Differentiated Services Code Point (DSCP) field of a header of the IPv4/IPv6 user plane data packet.

When the service identifier in the user plane data packet is consistent with a service identifier of the first policy, the first network can use the policy corresponding to the service identifier to determine whether the terminal device is required to establish the connection with the first network. For example, if the first policy includes a plurality of service identifiers and their corresponding priorities, the first network can determine whether the terminal device is required to establish the connection with the first network based on the priority corresponding to the service identifier in the user plane data packet in the first policy.

The embodiment of the present disclosure is not specifically limited to any specific scheme for first network to obtain the first policy. All or part of the information of the first policy may originate from at least one of: the terminal device, subscription information, and a Policy Charging Control (PCC) policy.

As an example, the terminal device may transmit part or all of the information in the first policy to the network device. The terminal device can transmit part or all of the information in the first policy to the first network via an NAS message. For example, the terminal device can transmit or update part or all of the information in the first policy to the first network in a registration process and/or a PDU session establishment process and/or a PDU session modification process.

As another example, a Unified Data Management (UDM) network element may transmit subscription information to the first network, and the subscription information may carry part or all of the information in the first policy. The UDM network element may transmit or update part or all of the information in the first policy to the first network in the registration process of the terminal device and/or the PDU session establishment process and/or the PDU session modification process.

As another example, a Policy Control Function (PCF) network element may transmit a PCC policy to the first network, and the PCC policy may carry part or all of the information in the first policy. The PCF network element may transmit or update part or all of the information in the first policy to the first network in the registration process of the terminal device and/or the PDU session establishment process and/or the PDU session modification process.

At S520, the terminal device establishes the connection with the first network in response to the first message.

In this case, the first network transmits the first message to the terminal device only when determining that the terminal device is required to establish the connection with the first network, otherwise the first network does not transmit the first message to the terminal device.

At S530, the terminal device determines whether to establish the connection with the first network based on the first message.

The first message may include indication information for indicating whether the terminal device is required to establish the connection with the first network, and the terminal device may establish or not establish the connection with the first network based on the indication information.

For example, if the indication information indicates that the terminal device is required to establish the connection with the first network, the terminal device can establish the connection with the first network after receiving the indication information. If the indication information indicates that the terminal device is not required to establish the connection with the first network, the terminal device does not establish the connection with the first network after receiving the indication information, and the terminal device can continue staying on the network currently in the connected state.

The indication information may be indicated by one or more bits. For example, 1 bit may be used to indicate the indication information. If the value of the bit is 0, it means that the terminal device is not required to establish the connection with the first network. If the value of the bit is 1, it means that the terminal device is required to establish the connection with the first network.

In another example, the terminal device may determine whether to establish the connection with the first network according to whether the first indication is carried in the first message. If the first message carries the first indication, it means that the terminal device is required to establish the connection with the first network. If the first message does not carry the first indication, it means that the terminal device is not required to establish the connection with the first network. The first indication is transmitted when the first network determines that the terminal device is required to establish the connection with the first network.

When a service triggers the first network to transmit the first message to the terminal device, the first network may determine whether the terminal device is required to establish the connection with the first network. When the terminal device is required to establish the connection with the first network, the first network includes the first indication in the first message. When the terminal device is not required to establish the connection with the first network, the first network does not include the first indication in the first message. After receiving the first message transmitted by the first network, the terminal device may first determine whether the first message carries the first indication, and if the first message carries the first indication, the terminal device establishes the connection with the first network. If the first message does not carry the first indication, the terminal device does not establish the connection with the first network.

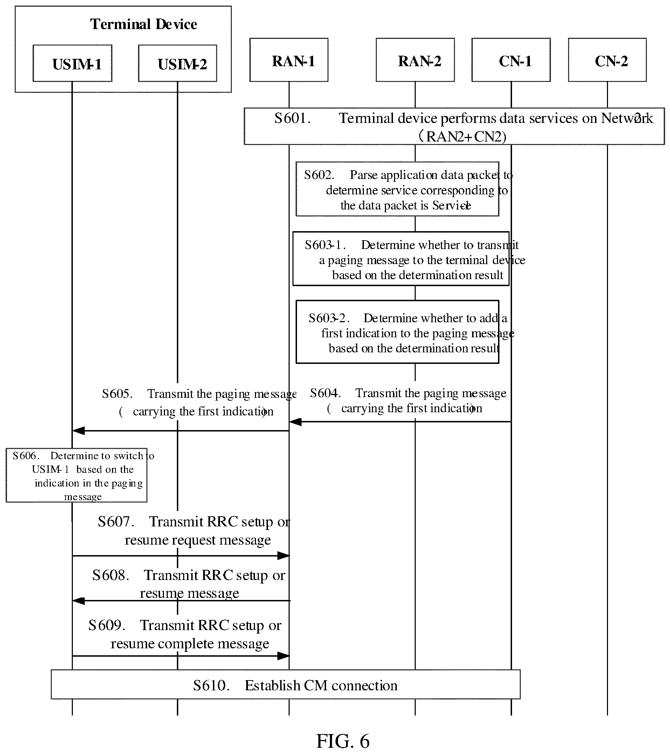

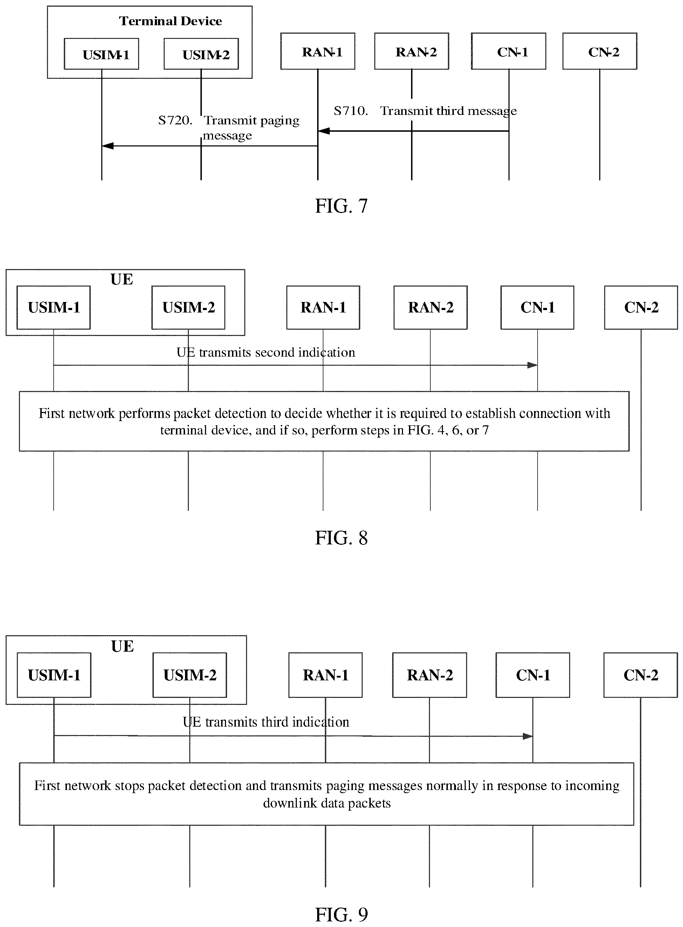

Optionally, as shown in FIG. 8, the terminal device may transmit a second indication to the network device. The second indication is used to instruct the first network to determine whether the terminal device is required to establish the connection with the first network based on the first policy and/or the service to be transmitted. After receiving the second indication transmitted by the terminal device, the first network determines whether the terminal device is required to establish the connection with the first network according to the scheme described above. For example, when the terminal is in a CM-IDLE state or an RRC-Inactive state, the first network can detect a data packet transmitted to the terminal device, and if there is a downlink data packet of a specific service that triggers paging (e.g., depending on the service priority ), the first network can determine that it needs to transmit a paging message to the terminal device based on the specific service (as shown at S603-1 in FIG. 6), or include the first indication in the paging message (as shown at S603-2 in FIG. 6), or include service information in the paging message (as shown at S420 in FIG. 4). If the UE is in the RRC-Inactive state, it can act according to the scheme shown in FIG. 7.

If the first network does not receive the second indication transmitted by the terminal device, it does not detect the data packet transmitted to the terminal device, but as long as a service triggers paging, the first network can transmit the paging message to the terminal device.

For example, the second indication may be transmitted to the first network when the terminal device decides to leave the first network or decides to disconnect from the first network.

For example, in a process where the terminal device first connects to the first network, then switches to the second network, and then switches from the second network to the first network as an example, the terminal device initially uses USIM-1 to connect to the first network, and needs to use USIM-2 to connect to the second network to perform Service-1 (such as voice service). Due to the limitation on the terminal's capabilities (it can only transmit and receive data with one network), the terminal device needs to disconnect from the first network. In this case, the terminal device may transmit the second indication to the first network. In this case, the first network starts determination according to the above-described method based on the second indication. If there is a service on the first network that needs to be transmitted, the first network can determine whether the terminal device is required to establish the connection with the first network according to the above-described method If the first network does not receive the second indication transmitted by the terminal device, the first network may not need to perform the method described above, and may directly transmit the paging message to the terminal device without the determination.

If the terminal device completes Service-1, it switches from USIM-2 back to USIM-1, i.e., it disconnects the connection between USIM-2 and the second network and establishes the connection (such as RRC connection) with the first network via USIM-1. The terminal can transmit a third indication to the first network (as shown in FIG. 9). The third indication can be used to instruct the first network to stop determining whether the terminal device is required to establish the connection with the first network based on the first policy and/or the service to be transmitted. When the first network receives the third indication, it can stop the method described above based on the third indication.

Optionally, in an embodiment of the present disclosure, the second indication or the third indication may be transmitted by the terminal device to the first network via an NAS message or an RRC message. If the RRC message is transmitted, after receiving the "second indication" or "third indication", an RAN node may further transmit it to a core network node (such as AMF or SMF).

In the following, with reference to FIG. 6, the wireless communication method according to the embodiment of the present disclosure will be described in detail with reference to an example in which the first message is a paging message. The method shown in FIG. 6 includes steps S601 to S10.

At S601, USIM-1 of a terminal device completes registration or attachment on a first network, and USIM-2 of the terminal device completes registration or attachment on a second network. The terminal device is currently in a CM connected state with the second network, and is in a non-connected state with the first network.

The first network may include RAN-1 and CN-1, and the second network may include RAN-2 and CN-2.

At S602, CN-1 detects that there is a service that needs to trigger a paging message. There are two ways to trigger the paging message: 1) an application data packet and 2) a request message triggered by a third-party server.

CN-1 can determine to which service the service that triggers the paging message belongs. For example, CN-1 can determine that the service that triggers the paging message is Service-1.

If the paging message is triggered by an application data packet, CN-1 can perform a traffic detection function to determine that the data packet corresponds to Service-1. This process can be performed by a user plane network element in CN-1.

If the paging message is triggered by a third-party server, the third-party server can transmit a request message to a control plane network element via a control plane to trigger CN-1 to transmit the paging message to the terminal device. The control plane network element may be, for example, a PCF network element.

CN-1 can determine whether the terminal device is required to establish the connection with the first network based on the service information.

With reference to the above description, CN-1 can determine whether the terminal device is required to establish the connection with the first network based on the service information and the second information.

The second information may be understood as a policy, and the second information may include at least one of: a service priority, a service that requires the first indication to be added to a paging message, and a service that does not require the first indication to be added to the paging message.

CN-1 can determine whether the terminal device is required to establish the connection with the first network based on the service information and the second information in a similar way as the terminal device determines whether it is required to establish the connection with the first network based on the first information and the second information as shown in FIG. 3, and details thereof will be omitted here.

In an embodiment of the present disclosure, there are two ways for CN-1 to indicate to the terminal device whether it is required to establish the connection with the first network, which are described in step S603-1 and step S603-2, respectively.

At S603-1, CN-1 determines whether it needs to transmit the paging message to the terminal device based on the determination result. If CN-1 determines that the terminal device is required to establish the connection with the first network, CN-1 can transmit the paging message to the terminal device. If CN-1 determines that the terminal device is not required to establish the connection with the first network, then CN-1 may not transmit the paging message to the terminal device.

Similarly, if CN-1 uses the paging message to directly indicate whether the terminal device is required to establish the connection with the first network, as long as the terminal device receives the paging message, it can establish the connection with the first network. If the terminal device does not receive the paging message, the terminal device does not establish the connection with the first network.

At S603-2, CN-1 may determine whether the first indication is required to be added to the paging message based on the determination result. In this case, regardless of whether the terminal device is required to establish the connection with the first network, CN-1 can transmit the paging message to the terminal device, but can indicate the determination result to the terminal device via the first indication.

If CN-1 determines that the terminal device is required to establish the connection with the first network, CN-1 can add the first indication to the paging message. If CN-1 determines that the terminal device is not required to establish the connection with the first network, then CN-1 -1 may not add the first indication to the paging message.

Similarly, if CN-1 uses the first indication to indicate whether the terminal device is required to establish the connection with the first network, after receiving the paging message, the terminal device can determine whether to establish the connection with the first network based on whether the first indication is carried in the paging message. If the paging message includes the first indication, the terminal device can establish the connection with the first network. If the paging message does not carry the first indication, the terminal device does not establish the connection with the first network.

In an embodiment of the present disclosure, CN-1 transmitting the paging message to the terminal device may mean that CN-1 transmitting the paging message to the terminal device via RAN-1. In other words, CN-1 can transmit the paging message to RAN-1, and RAN-1 can transmit the paging message to the terminal device based on the paging message transmitted by CN-1.

At S604, CN-1 transmits the paging message to RAN-1, or includes the first indication in the paging message, based on S603-1 or the determination result in S603-1.

At S605, after receiving the paging message transmitted by CN-1, RAN-1 transmits the paging message to the terminal device.

RAN-1 can transmit the paging message transmitted by CN-1 transparently to the terminal device.

At S606, after receiving the paging message transmitted by the RAN-1, the terminal device establishes or does not establish the connection with the first network based on indication by the paging message.

When the terminal device is connected to the second network, it still monitors paging request messages for SIM-1 at specified time points as usual. That is, it monitors whether RAN-1 transmits the paging message to the terminal device.

If the paging message is transmitted based on the policy of the step S603-1, the terminal device can establish the connection with the first network after receiving the paging message.

If the paging message is transmitted based on the policy of the step S603-2, after receiving the paging message, the terminal device may first determine whether the paging message carries the first indication. If the paging message carries the first indication, the terminal device can establish the connection with the first network. If the paging message does not carry the first indication, the terminal device does not establish the connection with the first network.

If the terminal device determines that it is required to establish the connection with the first network, the terminal device may perform step S670.

At S607, the terminal device transmits a first request message to RAN-1. The first request message may be an RRC connection setup message, or the first message may be an RRC resume request message.

If the terminal device is in the RRC idle state with RAN-1, the terminal device can transmit an RRC connection setup message to RAN-1. If the terminal device is in the RRC inactive state with RAN-1, the terminal device can transmit an RRC resume request message to RAN-1.

When the terminal device transmits the first request message, a cause value may be carried in the first request message to indicate the cause for which the terminal device transmits the first request message. The cause value may include SIM card switching and/or an identifier of a specific service.

At S608, after receiving the RRC connection setup message transmitted by the terminal device, RAN-1 may transmit an RRC setup message to the terminal device. After receiving the RRC resume request message transmitted by the terminal device, RAN-1 may transmit an RRC resume message to the terminal device.

At S609, after receiving the RRC setup message, the terminal device may transmit an RRC setup complete message to RAN-1. After receiving the RRC Resume message transmitted by RAN-1, the terminal device may transmit an RRC resume complete message to RAN-1.

At S610, the terminal device initiates an NAS message to CN-1. For example, the terminal device transmits a service request message or a registration request message to CN-1 to enter the CM connected state.

The scheme for the first network to determine whether the terminal device is required to establish the connection with the first network is similar to the scheme described above for the terminal device to determine whether it is required to establish the connection with the first network.

The first network may determine whether the terminal device is required to establish the connection with the first network based on the service information. The first network device may determine whether the terminal device is required to establish the connection with the first network based on the importance of the service information.

For example, the first network may determine whether the terminal device is required to establish the connection with the first network based on the service information and second information. The second information may include at least one of: a service priority, a service that requires the terminal device to establish the connection with the first network, and a service that does not require terminal device to establish the connection with the first network.

Details will be omitted here for simplicity.

As described above, when the first network receives an application data packet or a request message triggered by a third-party server, the first network may transmit the paging message to the terminal device.

The paging message may be transmitted by an access network device to the terminal device. For example, the access network device may transmit the paging message to the terminal device via an air interface.

The access network device may transmit the paging message to the terminal device based on a third message, which may originate from a control plane device or a user plane device in a core network. That is, the core network device may transmit the third message to the access network device via the user plane device or the control plane device.

The third message may include the first indication and/or the service identifier.

As an example, if the decision is made by the terminal device, when a service triggers the core network device to transmit the third message, the core network device can transmit the third message directly to the access network device and add the service identifier to the third message.

As another example, if the decision is made by the network device, when a service triggers the core network device to transmit the third message, the core network device can determine whether the terminal device is required to establish the connection with the first network based on the service and the first policy. If the terminal device is required to establish the connection with the first network, the core network device may add the first indication to the third message, and transmit the third message with the first indication added to the access network device.

As shown in FIG. 7, the network device corresponding to SIM-1 includes RAN-1 and CN-1, and the network device corresponding to SIM-2 includes RAN-2 and CN-2. The terminal device can communicate with RAN-1 and/or CN-1 using SIM-1, and the terminal device can communicate with RAN-2 and/or CN-2 using SIM-2.

The method shown in FIG. 7 includes steps S710 and S720.

At S710, CN-1 transmits a third message to an access network device. When a service arrives on a first network, CN-1 can transmit the third message to the access network device.

At S720, after receiving the third message transmitted by CN-1, RAN-1 may transmit a paging message to a terminal device. The paging message may refer to the first message described above.

The third message may be a paging message or a GPRS Tunneling Protocol (GTP-U) message. For example, the third message transmitted by a control plane device in a core network to the access network device may be a paging message. In another example, the third message transmitted by a user plane device to the access network device may be a GTP-U message.

If the terminal device is in the CM-idle state with the first network, in this case an air interface between the terminal device and the access network device, and an N2 interface between the access network device and the core network device are in a released state. Then the third message transmitted by the core network to the access network is a paging message, and the first message transmitted by the access network device to the terminal device is a paging message. When the core network device can transmit the paging message to the access network device via the control plane device.

If the terminal device is in the RRC-inactive state with the first network, in this case the air interface between the terminal device and the access network device is released, but the N2 interface between the access network device and the core network device is not released. Then the core network device will not be triggered to transmit a paging message to the access network device. When a service arrives, the core network device can transmit a GTP-U message to the access network device via the user plane device, and the access network device can transmit a paging message to the terminal device after receiving the user plane data.

Regardless of whether the third message transmitted by the core network device to the access network device is a paging message or a GTP-U message, the paging message or GTP-U message may include the first information, such that the terminal device can determine whether to establish a connection with the first network based on the first information.

The first information and/or the first indication included in the paging message may be transmitted at a granularity of UE ID.

A UE ID can correspond to a USIM. For example, a UE ID can correspond to a Subscription Permanent Identifier (SUPI) or a Globally Unique Temporary UE Identity (GUTI).

In an example where the first message includes service information, each service information has corresponding service information. After receiving the paging message, the terminal device can search for the service information corresponding to its UE ID, and then determine whether to establish the connection with the first network based on the service information.

In another example, for the two-stage paging message shown in FIG. 7, the positions to add the first information and the first indication are described respectively. For the meaning of the first information and the first indication, reference can be made to the above description. Each of the first information and the first indication may be indicated by using a field in an existing paging message, or may be indicated by adding a new field to the existing paging message.

For the paging message in S710, the format of the paging message transmitted by CN-1 to RAN-1 is shown in Table 4.

**Table 4**

| **IE/Group Name** | **Range** | **Critical** | **Designated Critical** |
|---|---|---|---|
| Message Type | | Yes | Ignore |
| UE Paging Identity | | Yes | Ignore |
| Discontinuous Reception of Paging | | Yes | Ignore |
| Option 2: "First Information" | | | |
| Option 2: "First Indication" | | | |
| TAI Table for Paging | 1 | Yes | Ignore |
| > TAI Table for Paging Menu | *1..<maxnoofT AIforPaging>* | - | |
| > >TAI | | - | |
| Paging Priority (Option 1: "First Indication") | | Yes | Ignore |
| UE Radio Capability for Paging | | Yes | Ignore |
| Service Data for Paging (Option 1: First Information) | | Yes | Ignore |
| Paging Source | | Yes | Ignore |

Here, TAI represents a Tracking Area Identity (TAI) of the UE, and IE represents an Information Element (IE).

The first information can be added to the field of Service Data for Paging (Assistance Data for Paging), as shown in Option 1 in Table 4. The first information can alternatively be added to a new parameter, as shown in Option 2 in Table 4, i.e., in the paging message shown in Table 4, a new field can be added to indicate the first information

The first indication can be added to the field of Paging Priority, as shown in Option 1 in Table 4. The first indication can alternatively be added to a new parameter, as shown in Option 2 in Table 4, i.e., in the paging message shown in Table 4, a new field can be added to indicate the first indication.

The paging message can be transmitted by CN-1 to RAN-1 at the granularity of UE ID, and one paging message can be used for paging a plurality of terminal devices at the same time. When CN-1 includes the first information and/or the first indication in the paging message, the UE ID may be used to identify the first information and/or the first indications transmitted to different terminal devices.

For the paging message in S720, the format of the paging message transmitted by RAN-1 to the terminal device may be as follows.

```
  Paging ::= SEQUENCE {
  pagingRecordList PagingRecordList OPTIONAL, - Need N
  lateNonCriticalExtension OCTET STRING OPTIONAL,
  nonCriticalExtension SEQUENCE{ } OPTIONAL
  }
  PagingRecordList ::= SEQUENCE (SIZE(L.maxNrofPageRec)) OF
 PagingRecord
 
  PagingRecord ::= SEQUENCE {
ue-Identity PagingUE-Identity,
  accessType ENUMERATED {non3GPP} OPTIONAL, - Need N
  "Service Information" or "First Indication"
  ...
  }

  PagingUE-Identity ::= CHOICE {
  ng-5G-S-TMSI NG-5G-S-TMSI,
  fullI-RNTI I-RNTI-Value,
...
  }
  - TAG-PAGING-STOP
  - ASN1STOP
```

The first information can be added to the field of Paging Record, which includes the first information for a plurality of terminal devices. The first information for different terminal devices can be distinguished based on UE-IDs. Each UE-ID has the corresponding first information.

The first indication can also be added to the field of Paging Record, and can be implemented by a new value in Paging Record. Alternatively, the first indication can be indicated by adding a new parameter in the paging message.

One paging message transmitted by RAN-1 to the terminal device may be used for paging a plurality of terminal devices at the same time. Therefore, the first information and the first indication can be transmitted at the granularity of UE-ID. In this case, after receiving the paging message, the terminal device can determine whether to establish the connection with the first network based on the service identifier and/or the first indication corresponding to its UE-ID.

The embodiment of the present disclosure reuses the existing process to transmit the second information to the terminal device, and reuses the fields in the existing paging message to transmit the first information and/or the first indication, which can reduce the additional complexity of the entire system.

In the embodiment of the present disclosure, the terminal device supporting multiple SIM cards may mean that the terminal device supports two or more SIM cards. The SIM cards may refer to ordinary SIM cards or USIM cards.

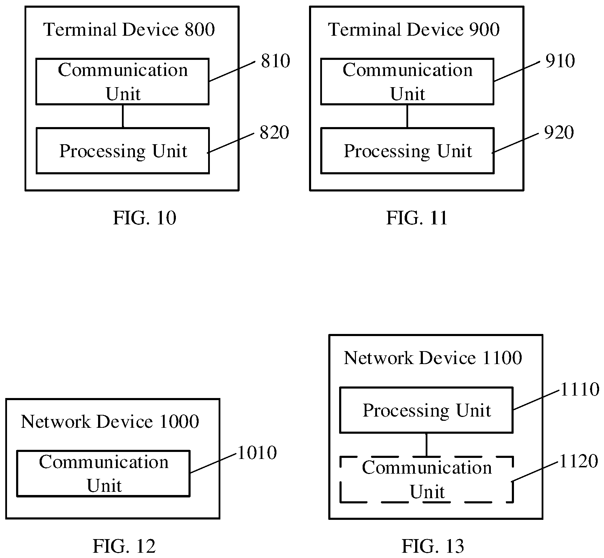

The wireless communication methods according to the embodiments of the present disclosure have been described in detail above. The devices according to the embodiments of the present disclosure will be described below with reference to FIG. 10 to FIG. 16. The technical features described in the method embodiments are applicable to the following device embodiments.

FIG. 10 is a schematic block diagram of a terminal device according to an embodiment of the present disclosure. The terminal device may be any terminal device described above. The terminal device 800 in FIG. 10 includes a communication unit 810 and a processing unit 820.

The communication unit 810 is configured to receive a first message transmitted by a first network, the first message including first information.

The processing unit 820 is configured to determine whether to establish a connection with the first network based on the first information.

Optionally, the terminal device is a terminal device that supports a plurality of Universal Subscriber Identity Module (USIM) cards, including USIM-1 of the terminal device corresponding to the first network and USIM-2 of the terminal device corresponding to a second network.

Optionally, the terminal device is in a Radio Resource Control (RRC) connected state and/or a Connection Management (CM) connected state with the second network.

Optionally, the processing unit 820 is configured to release an RRC connection and/or a CM connection with the second network when determining to establish the connection with the first network.

Optionally, the first information includes a service identifier and/or a priority corresponding to the service identifier.

Optionally, the service identifier is represented by at least one of: an application program identifier, a service identifier, an Internet Protocol (IP) address, a Media Access Control (MAC) address, a Virtual Local Area Network (VLAN) identifier, a Data Network Name (DNN), and an Access Point Name (APN).

Optionally, the communication unit 810 is configured to receive second information transmitted by the first network. The second information is used by the terminal device to determine whether to establish the connection with the first network. The second information includes at least one of: a service priority, a service that requires the terminal device to establish the connection with the first network, and a service that does not require the terminal device to establish the connection with the first network.

Optionally, the second information corresponds to different information at different time and/or different locations.

Optionally, the processing unit 820 is configured to determine whether to establish the connection with the first network based on the first information and at least one of the second information and an ongoing service of the terminal device in the second network.

Optionally, the processing unit 820 is configured to determine whether to establish the connection with the first network based on the priority of the service included in the first information and the priority of the ongoing service in the second network.

Optionally, the processing unit 820 is configured to determine whether to establish the connection with the first network based on whether the service included in the first information belongs to one or more services that require the terminal device to establish the connection with the first network in the second information.

Optionally, the second information is carried in at least one of: a registration accept message, a Protocol Data Unit (PDU) session establishment accept message, a PDU session modification accept message, a message in a User Equipment (UE) Configuration Update (UCU) process.

Optionally, the second information is carried in the first message.

Optionally, the second information is transmitted to the terminal device by a Session Management Function (SMF) network element or a Policy Control Function (PCF) network element.

Optionally, the communication unit 810 is configured to transmit a first request message to the first network when determining to establish the connection with the first network, the first request message being used to request establishment of an RRC connection with the first network.

Optionally, the first request message includes an RRC connection setup request message and/or an RRC resume request message.

Optionally, the first request message includes a cause value indicating a cause for triggering the terminal device to transmit the first request message.

Optionally, the cause value includes USIM switching and/or a specific service identifier.

Optionally, the communication unit 810 is configured to transmit, when determining to establish the connection with the first network, a Non-Access Stratum (NAS) message to the first network to establish an NAS connection with the first network.

Optionally, the NAS message includes a service request message and/or a registration request message.

Optionally, the first message is a paging message.

Optionally, the first information and/or the second information in the paging message is transmitted at a granularity of a UE identifier (ID).

Optionally, the paging message is transmitted by an access network device to the terminal device via an air interface.

Optionally, the paging message is transmitted by the access network device to the terminal device based on a third message, the third message originates from a control plane device or a user plane device in a core network, and the third message includes the first information and/or the second information.

Optionally, the third message transmitted by the control plane device in the core network to the access network device is a paging message.

Optionally, the third message transmitted by the user plane device to the access network device is a General Packet Radio Service (GPRS) Tunneling Protocol (GTP-U) message.

FIG. 11 is a schematic block diagram of a terminal device according to an embodiment of the present disclosure. The terminal device may be any terminal device described above. The terminal device 900 in FIG. 11 includes a communication unit 910 and a processing unit 920.

The communication unit 910 is configured to receive a first message transmitted by a first network.

The processing unit 920 is configured to establish a connection with the first network in response to the first message, or to determine whether to establish a connection with the first network based on the first message.

Optionally, the first message is a paging message.

Optionally, the first message is transmitted by the first network when determining that the terminal device is required to establish the connection with the first network.

Optionally, the processing unit 920 is configured to determine whether to establish the connection with the first network based on whether the first message carries a first indication that instructs the terminal device to establish the connection with the first network.

Optionally, the processing unit 920 is configured to establish the connection with the first network when the first message carries the first indication; and not to establish the connection with the first network when the first message does not carry the first indication.

Optionally, the first indication is transmitted when the first network determines that the terminal device is required to establish a connection with the first network.

Optionally, the terminal device is a terminal device that supports a plurality of Universal Subscriber Identity Module (USIM) cards, including USIM-1 of the terminal device corresponding to the first network and USIM-2 of the terminal device corresponding to a second network.

Optionally, the terminal device is in a Radio Resource Control (RRC) connected state and/or a Connection Management (CM) connected state with the second network.

Optionally, the first network determines whether the terminal device is required to establish the connection with the first network based on a first policy, and the first policy includes at least one of: a service priority, a service that requires the first indication to be added to a paging message, and a service that does not require the first indication to be added to the paging message.

Optionally, the first policy corresponds to different information at different time and/or different locations.

Optionally, the service is represented by a service identifier.

Optionally, the first network determines whether the terminal device is required to establish the connection with the first network based on the first policy and/or a service to be transmitted.

Optionally, the service to be transmitted is determined by the first network based on a service identifier in a user plane data packet.

Optionally, all or part of information of the first policy originates from at least one of: the terminal device, subscription information, and a Policy and Charging Control (PCC) policy.

Optionally, the processing unit 920 is configured to release an RRC connection and/or a CM connection with the second network when determining to establish the connection with the first network.

Optionally, the communication unit 910 is configured to transmit, when establishing the connection with the first network, a first request message to the first network, the first request message requesting establishment of an RRC connection with the first network.

Optionally, the first request message includes an RRC connection setup request message and/or an RRC resume request message.

Optionally, the first request message includes a cause value indicating a cause for triggering the terminal device to transmit the first request message.

Optionally, the cause value includes USIM switching and/or a specific service identifier.

Optionally, the processing unit 920 is configured to transmit, when establishing the connection with the first network, a Non-Access Stratum (NAS) message to the first network to establish an NAS connection with the first network.

Optionally, the NAS message includes a service request message and/or a registration request message.

Optionally, the paging message is transmitted by an access network device to the terminal device via an air interface.

Optionally, the paging message is transmitted by the access network device to the terminal device based on a third message, the third message originates from a control plane device or a user plane device in a core network, and the third message includes the first indication and/or the service identifier.

Optionally, the third message transmitted by the control plane device to the access network device is a paging message.

Optionally, the third message transmitted by the user plane device to the access network device is a General Packet Radio Service (GPRS) Tunneling Protocol (GTP-U) message.

FIG. 12 is a schematic block diagram of a network device according to an embodiment of the present disclosure. The network device may be any network device described above. The network device 1000 in FIG. 12 includes a communication unit 1010.

The communication unit 1010 is configured to transmit a first message to a terminal device, the first message including first information for use by the terminal device to determine whether to establish a connection with a first network.

Optionally, the terminal device is a terminal device that supports a plurality of Universal Subscriber Identity Module (USIM) cards, including USIM-1 of the terminal device corresponding to the first network and USIM-2 of the terminal device corresponding to a second network.

Optionally, the terminal device is in a Radio Resource Control (RRC) connected state and/or a Connection Management (CM) connected state with the second network.

Optionally, the first information includes a service identifier and/or a priority corresponding to the service identifier.

Optionally, the service identifier is represented by at least one of: an application program identifier, a service identifier, an Internet Protocol (IP) address, a Media Access Control (MAC) address, a Virtual Local Area Network (VLAN) identifier, a Data Network Name (DNN), and an Access Point Name (APN).

Optionally, the communication unit 1010 is configured to transmit second information to the terminal device. The second information is used by the terminal device to determine whether to establish the connection with the first network. The second information includes at least one of: a service priority, a service that requires the terminal device to establish the connection with the first network, and a service that does not require the terminal device to establish the connection with the first network.

Optionally, the second information corresponds to different information at different time and/or different locations.

Optionally, the second information is carried in at least one of: a registration accept message, a Protocol Data Unit (PDU) session establishment accept message, a PDU session modification accept message, a message in a User Equipment (UE) Configuration Update (UCU) process.

Optionally, the second information is carried in the first message.

Optionally, the second information is transmitted to the terminal device by a Session Management Function (SMF) network element or a Policy Control Function (PCF) network element.

Optionally, the communication unit 1010 is configured to receive a first request message transmitted by the terminal device, the first request message being used to request establishment of an RRC connection with the first network.

Optionally, the first request message includes an RRC connection setup request message and/or an RRC resume request message.

Optionally, the first request message includes a cause value indicating a cause for triggering the terminal device to transmit the first request message.

Optionally, the cause value includes USIM switching and/or a specific service identifier.

Optionally, the communication unit 1010 is configured to receive a Non-Access Stratum (NAS) message transmitted by the terminal device. The NAS message is used to request to establish an NAS connection with the first network.

Optionally, the NAS message includes a service request message and/or a registration request message.

Optionally, the first message is a paging message.

Optionally, the first information and/or the second information in the paging message is transmitted at a granularity of a UE identifier (ID).

Optionally, the first network is an access network device, and the paging message is transmitted by the access network device to the terminal device via an air interface.

Optionally, the paging message is transmitted by the access network device to the terminal device based on a third message, the third message originates from a control plane device or a user plane device in a core network, and the third message includes the first information and/or the second information.

Optionally, the third message transmitted by the control plane device in the core network to the access network device is a paging message.

Optionally, the third message transmitted by the user plane device to the access network device is a General Packet Radio Service (GPRS) Tunneling Protocol (GTP-U) message.

FIG. 13 is a schematic block diagram of a network device according to an embodiment of the present disclosure. The network device may be any network device described above. The network device 1100 in FIG. 13 includes a processing unit 1110.

The processing unit 1110 is configured to determine whether a terminal device is required to establish a connection with the first network based on a service to be transmitted.

Optionally, the network device further includes a communication unit 1120 configured to transmit a first message to the terminal device. The first message is transmitted by the first network when determining that the terminal device is required to establish the connection with the first network.

Optionally, the communication unit 1120 is configured to transmit a first message to the terminal device, the first message including a first indication. The first indication is transmitted by the first network when determining that the terminal device is required to establish the connection with the first network.

Optionally, the first message is a paging message.

Optionally, the terminal device is a terminal device that supports a plurality of Universal Subscriber Identity Module (USIM) cards, including USIM-1 of the terminal device corresponding to the first network and USIM-2 of the terminal device corresponding to a second network. The terminal device is in a Radio Resource Control (RRC) connected state and/or a Connection Management (CM) connected state with the second network.

Optionally, the processing unit 1110 is configured to determine whether the terminal device is required to establish the connection with the first network based on the service to be transmitted and second information. The second information includes at least one of: a service priority, a service that requires the terminal device to establish the connection with the first network, and a service that does not require the terminal device to establish the connection with the first network.

Optionally, the service priority include a service priority at specific time and/or a service priority at a specific location.

Optionally, the second information includes the service priority, and the processing unit 1110 is configured to determine whether the terminal device is required to establish the connection with the first network based on the priority of the service to be transmitted.

Optionally, the processing unit 1110 is configured to determine whether the terminal device is required to establish the connection with the first network based on whether the service to be transmitted belongs to one or more services that require the terminal device to establish the connection with the first network in the second information.

Optionally, the terminal device further includes a communication unit 1120 configured to receive a first request message transmitted by the terminal device. The first request message is used to request establishment of an RRC connection with the first network.

Optionally, the first request message includes an RRC connection setup request message and/or an RRC resume request message.

Optionally, the first request message includes a cause value indicating a cause for triggering the terminal device to transmit the first request message.

Optionally, the cause value includes USIM switching and/or a specific service identifier.

Optionally, the terminal device further includes a communication unit 1120 configured to receive a Non-Access Stratum (NAS) message transmitted by the terminal device. The NAS message is used to establish an NAS connection with the first network.

Optionally, the NAS message includes a service request message and/or a registration request message.

Optionally, the first network is an access network device, and the paging message is transmitted by the access network device to the terminal device via an air interface. The paging message is transmitted by the access network device to the terminal device based on a third message, the third message originates from a control plane device or a user plane device in a core network, and the third message includes the first indication and/or the service identifier.

Optionally, the third message transmitted by the control plane device to the access network device is a paging message.

Optionally, the third message transmitted by the user plane device to the access network device is a General Packet Radio Service (GPRS) Tunneling Protocol (GTP-U) message.

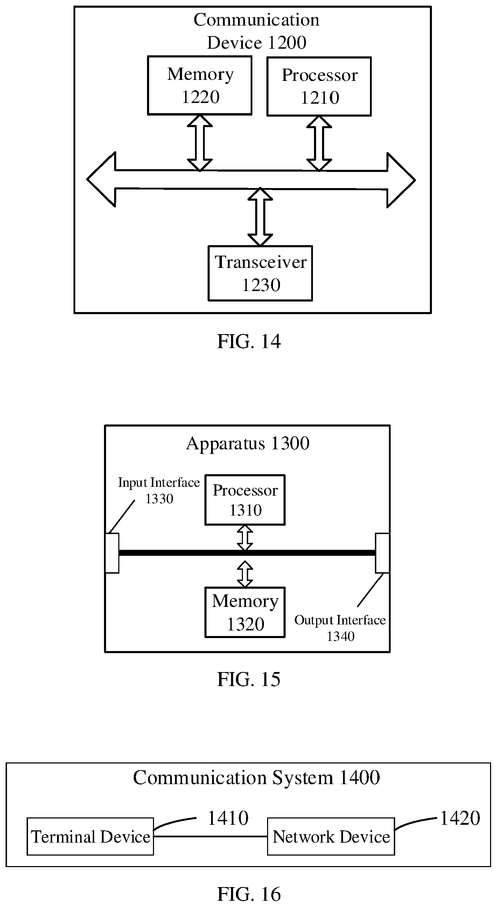

FIG. 14 is a schematic diagram showing a structure of a communication device 1200 according to an embodiment of the present disclosure. The communication device 1200 shown in FIG. 14 includes a processor 1210, and the processor 1210 can invoke and execute a computer program from a memory to perform the method according to any of the embodiments of the present disclosure.

Optionally, as shown in FIG. 14, the communication device 1200 may further include a memory 1220. The processor 1210 can invoke and execute a computer program from the memory 1220 to perform the method according to any of the embodiments of the present disclosure.

The memory 1220 may be a separate device independent of the processor 1210, or may be integrated in the processor 1210.

Optionally, as shown in FIG. 14, the communication device 1200 may further include a transceiver 1230. The processor 1210 can control the transceiver 1230 to communicate with other devices, and in particular to transmit information or data to other devices or receive information or data transmitted by other devices.

Here, the transceiver 1230 may include a transmitter and a receiver. The transceiver 1230 may further include one or more antennas.

Optionally, the communication device 1200 may be the network device in the embodiment of the present disclosure, and the communication device 1200 can perform corresponding procedures implemented by the network device in the method according to any of the embodiments of the present disclosure. Details thereof will be omitted here for simplicity.

Optionally, the communication device 1200 may be the mobile terminal/terminal device in the embodiment of the present disclosure, and the communication device 1200 can perform corresponding procedures implemented by the mobile terminal/terminal device in the method according to any of the embodiments of the present disclosure. In particular, the communication device 1200 can perform corresponding procedures implemented by the first terminal device and/or the second terminal device in the method according to any of the embodiments of the present disclosure. Details thereof will be omitted here for simplicity.

FIG. 15 is a schematic diagram showing a structure of an apparatus according to an embodiment of the present disclosure. The apparatus 1300 shown in FIG. 15 includes a processor 1310, and the processor 1310 can invoke and run a computer program from a memory to implement the method in the embodiment of the present disclosure.

Optionally, as shown in FIG. 15, the apparatus 1300 may further include a memory 1320. The processor 1310 can invoke and run a computer program from the memory 1320 to implement the method in the embodiment of the present disclosure.

The memory 1320 may be a separate device independent from the processor 1310, or may be integrated in the processor 1310.

Optionally, the apparatus 1300 may further include an input interface 1330. The processor 1310 can control the input interface 1330 to communicate with other devices or apparatuses, and in particular, obtain information or data transmitted by other devices or apparatuses.

Optionally, the apparatus 1300 may further include an output interface 1340. The processor 1310 can control the output interface 1340 to communicate with other devices or apparatuses, and in particular, output information or data to other devices or apparatuses.

Optionally, the apparatus can be applied to the network device in the embodiment of the present disclosure, and the apparatus can implement the corresponding processes implemented by the network device in the various methods of the embodiments of the present disclosure. For the sake of brevity, details thereof will be omitted here.

Optionally, the apparatus can be applied to the mobile terminal/terminal device in the embodiment of the present disclosure, and the apparatus can implement the corresponding process implemented by the mobile terminal/terminal device in each method of the embodiment of the present disclosure. For the sake of brevity, details thereof will be omitted here.

It can be appreciated that the apparatus in the embodiment of the present disclosure may be a chip, and the chip may also be referred to as a system-level chip, a system-chip, a chip system, or a system-on-chip.

FIG. 16 is a schematic block diagram of a communication system 1400 according to an embodiment of the present disclosure. As shown in FIG. 16, the communication system 1400 includes a terminal device 1410 and a network device 1420.

Here, the terminal device 1410 can be configured to implement the corresponding functions implemented by the terminal device in the above method, and the network device 1420 can be configured to implement the corresponding functions implemented by the network device in the above method. For the sake of brevity, details thereof will be omitted here.

It is to be noted that the processor in the embodiment of the present disclosure may be an integrated circuit chip with signal processing capability. In an implementation, the steps of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the steps of the above methods in combination with its hardware.

It can be appreciated that the memory in the embodiments of the present disclosure may be a transitory memory or a non-transitory memory, or may include both transitory and non-transitory memories. Here, the non-transitory memory may be a Read-Only Memory (ROM), a Programmable ROM (PROM), an Erasable PROM (EPROM), an Electrically EPROM (EEPROM), or a flash memory. The transitory memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) ), and Direct Rambus RAM (DR RAM). It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

An embodiment of the present disclosure also provides a computer-readable storage medium for storing a computer program.

Optionally, the computer-readable storage medium can be applied to the network device in the embodiment of the present disclosure, and the computer program can cause a computer to perform corresponding procedures implemented by the network device in the method according to any of the embodiments of the present disclosure. Details thereof will be omitted here for simplicity.

Optionally, the computer-readable storage medium can be applied to the mobile terminal/terminal device in the embodiment of the present disclosure, and the computer program can cause a computer to perform corresponding procedures implemented by the mobile terminal/terminal device in the method according to any of the embodiments of the present disclosure. Details thereof will be omitted here for simplicity.

An embodiment of the present disclosure also provides a computer program product including computer program instructions.

Optionally, the computer program product can be applied to the network device in the embodiment of the present disclosure, and the computer program instructions can cause a computer to perform corresponding procedures implemented by the network device in the method according to any of the embodiments of the present disclosure. Details thereof will be omitted here for simplicity.

Optionally, the computer program product can be applied to the mobile terminal/terminal device in the embodiment of the present disclosure, and the computer program instructions can cause a computer to perform corresponding procedures implemented by the mobile terminal/terminal device in the method according to any of the embodiments of the present disclosure. Details thereof will be omitted here for simplicity.

An embodiment of the present disclosure also provides a computer program.

Optionally, the computer program can be applied to the network device in the embodiment of the present disclosure. The computer program, when executed on a computer, can cause the computer to perform corresponding procedures implemented by the network device in the method according to any of the embodiments of the present disclosure. Details thereof will be omitted here for simplicity.

Optionally, the computer program can be applied to the mobile terminal/terminal device in the embodiment of the present disclosure. The computer program, when executed on a computer, can cause the computer to perform corresponding procedures implemented by the mobile terminal/terminal device in the method according to any of the embodiments of the present disclosure. Details thereof will be omitted here for simplicity.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure as defined by the appended claims.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer-readable storage medium. Based on this understanding, all or part of the technical solutions according to the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include various mediums capable of storing program codes, such as a Universal Serial Bus flash drive, a mobile hard disk, a Read-Only Memory (ROM), a Random Access Memory (RAM), a magnetic disk, or an optical disc.

While the specific embodiments of the present disclosure have been described above, the protect scope of the present disclosure is not limited to these embodiments. Various variants and alternatives can be easily conceived by any of those skilled in the art as long as these variants and alternatives are to be encompassed by the protect scope of present disclosure as defined by the claims as attached.

## Claims

1. A wireless communication method, performed by a terminal device which supports a plurality of Universal Subscriber Identity Module, USIM, cards, the method comprising:
receiving, by the terminal device, a first message transmitted by a first network; and
establishing, by the terminal device, a connection with the first network in response to the first message, wherein the first message is a paging message carrying service information,
wherein:
the first message is transmitted by the first network when determining that the terminal device is required to establish the connection with the first network,
USIM-1 of the terminal device corresponds to the first network and USIM-2 of the terminal device corresponds to a second network;
the terminal device is in a Radio Resource Control, RRC, connected state and/or a Connection Management, CM, connected state with the second network, and
whether the terminal device is required to establish the connection with the first network is determined by the first network based on a first policy, and the first policy comprises a service priority, wherein the service priority identifies a service that requires the terminal device to connect to the first network or a service that does not require the terminal device to connect to the first network,
**characterized in that**, all or part of information of the first policy originates from the terminal device, and the method further comprises: transmitting, by the terminal device, part or all of the information in the first policy to the first network via a Non-Access Stratum, NAS, message.

2. The method according to claim 1, wherein the service information comprises a service identifier that indicates a voice service.

3. The method according to claim 1 or 2, further comprising:
releasing, by the terminal device, an RRC connection and/or a CM connection with the second network during establishing the connection with the first network.

4. A wireless communication method, performed by a first network, comprising:
determining, by the
first network that a terminal device is required to establish a connection with the first network based on a first policy; and
transmitting, by the first network, a first message to the terminal device, the first message being a paging message carrying service information,
wherein:
USIM-1 of the terminal device corresponds to the first network and USIM-2 of the terminal device corresponds to a second network; and
the terminal device is in a Radio Resource Control, RRC, connected state and/or a Connection Management, CM, connected state with the second network, and
the first policy comprises a service priority, wherein the service priority identifies a service that requires the terminal device to connect to the first network or a service that does not require the terminal device to connect to the first network,
**characterized in that**, all or part of information of the first policy originates from the terminal device, the part or all of the information in the first policy is received by the first network from the terminal device via a Non-Access Stratum, NAS, message.

5. A terminal device (900), supporting a plurality of Universal Subscriber Identity Module, USIM, cards and comprising:
a communication unit (910) configured to receive a first message transmitted by a first network; and
a processing unit (920) configured to establish a connection with the first network in response to the first message, wherein the first message is a paging message carrying service information,
wherein:
the first message is configured to be transmitted by the first network when determining that the terminal device (900) is required to establish the connection with the first network,
USIM-1 of the terminal device (900) corresponds to the first network and USIM-2 of the terminal device (900) corresponds to a second network;
the terminal device (900) is in a Radio Resource Control, RRC, connected state and/or a Connection Management, CM, connected state with the second network, and
whether the terminal device (900) is required to establish the connection with the first network is configured to be determined by the first network based on a first policy, and the first policy comprises a service priority, wherein the service priority identifies a service that requires the terminal device (900) to connect to the first network or a service that does not require the terminal device (900) to connect to the first network, and
**characterized in that**, all or part of information of the first policy originates from the terminal device, and the processing unit (920) is configured to:
transmit, the part or all of the information in the first policy to the first network via a Non-Access Stratum, NAS, message.

6. The terminal device (900) according to claim 5, wherein the service information comprises a service identifier that indicates a voice service.

7. The terminal device (900) according to claim 5 or 6, wherein the processing unit (920) is configured to:
release an RRC connection and/or a CM connection with the second network during establishing the connection with the first network.

8. The terminal device (900) according to any of claims 5-7, wherein the NAS message comprises a service request message and/or a registration request message.

9. A network device, comprising a processor and a memory, wherein the memory is configured to store a computer program, and the processor is configured to invoke and execute the computer program stored in the memory to perform the method according to claim 4.

## Patentansprüche

1. Drahtloskommunikationsverfahren, das durch eine Endgerätvorrichtung durchgeführt wird, die eine Mehrzahl von Universal-Teilnehmeridentitätsmodul-, USIM, Karten unterstützt, wobei das Verfahren Folgendes umfasst:
Empfangen, durch die Endgerätvorrichtung, einer durch ein erstes Netzwerk übertragenen ersten Nachricht; und
Herstellen, durch die Endgerätvorrichtung, einer Verbindung mit dem ersten Netzwerk in Reaktion auf die erste Nachricht, wobei die erste Nachricht eine Pagingnachricht ist, die Dienstinformationen trägt,
wobei:
die erste Nachricht durch das erste Netzwerk übertragen wird, wenn bestimmt wird, dass die Endgerätvorrichtung die Verbindung mit dem ersten Netzwerk herstellen muss,
USIM-1 der Endgerätvorrichtung dem ersten Netzwerk entspricht und USIM-2 der Endgerätvorrichtung einem zweiten Netzwerk entspricht;
sich die Endgerätvorrichtung in einem Funkressourcensteuerungs-, RRC, verbundenen Zustand und/oder einem Verbindungsmanagement-, CM, verbundenen Zustand mit dem zweiten Netzwerk befindet, und
ob die Endgerätvorrichtung die Verbindung mit dem ersten Netzwerk herstellen muss, durch das erste Netzwerk basierend auf einer ersten Richtlinie bestimmt wird, und die erste Richtlinie eine Dienstpriorität umfasst, wobei die Dienstpriorität einen Dienst, der erfordert, dass sich die Endgerätvorrichtung mit dem ersten Netzwerk verbindet, oder einen Dienst, der nicht erfordert, dass sich die Endgerätvorrichtung mit dem ersten Netzwerk verbindet, identifiziert,
**dadurch gekennzeichnet, dass** alle oder ein Teil von Informationen der ersten Richtlinie von der Endgerätvorrichtung stammen, und das Verfahren ferner Folgendes umfasst: Übertragen, durch die Endgerätvorrichtung, eines Teils oder aller der Informationen in der ersten Richtlinie an das erste Netzwerk über eine Nichtzugriffsschicht-, NAS, Nachricht.

2. Verfahren nach Anspruch 1, wobei die Dienstinformationen eine Dienstkennung umfassen, die einen Sprachdienst anzeigt.

3. Verfahren nach Anspruch 1 oder 2, das ferner Folgendes umfasst:
Abbauen, durch die Endgerätvorrichtung, einer RRC-Verbindung und/oder einer CM-Verbindung mit dem zweiten Netzwerk während eines Herstellens der Verbindung mit dem ersten Netzwerk.

4. Drahtloskommunikationsverfahren, das durch ein erstes Netzwerk durchgeführt wird, das Folgendes umfasst:
Bestimmen, durch das erste Netzwerk, dass eine Endgerätvorrichtung eine Verbindung mit dem ersten Netzwerk herstellen muss, basierend auf einer ersten Richtlinie; und
Übertragen, durch das erste Netzwerk, einer ersten Nachricht an die Endgerätvorrichtung, wobei die erste Nachricht eine Pagingnachricht ist, die Dienstinformationen trägt,
wobei:
USIM-1 der Endgerätvorrichtung dem ersten Netzwerk entspricht und USIM-2 der Endgerätvorrichtung einem zweiten Netzwerk entspricht; und
sich die Endgerätvorrichtung in einem Funkressourcensteuerungs-, RRC, verbundenen Zustand und/oder einem Verbindungsmanagement-, CM, verbundenen Zustand mit dem zweiten Netzwerk befindet, und
die erste Richtlinie eine Dienstpriorität umfasst, wobei die Dienstpriorität einen Dienst, der erfordert, dass sich die Endgerätvorrichtung mit dem ersten Netzwerk verbindet, oder einen Dienst, der nicht erfordert, dass sich die Endgerätvorrichtung mit dem ersten Netzwerk verbindet, identifiziert,
**dadurch gekennzeichnet, dass** alle oder ein Teil von Informationen der ersten Richtlinie von der Endgerätvorrichtung stammen, wobei der Teil oder alle der Informationen in der ersten Richtlinie durch das erste Netzwerk von der Endgerätvorrichtung über eine Nichtzugriffsschicht-, NAS, Nachricht empfangen werden.

5. Endgerätvorrichtung (900), die eine Mehrzahl von Universal-Teilnehmeridentitätsmodul-, USIM, Karten unterstützt und Folgendes umfasst:
eine Kommunikationseinheit (910), die dazu konfiguriert ist, eine durch ein erstes Netzwerk übertragene erste Nachricht zu empfangen; und
eine Verarbeitungseinheit (920), die dazu konfiguriert ist, eine Verbindung mit dem ersten Netzwerk in Reaktion auf die erste Nachricht herzustellen, wobei die erste Nachricht eine Pagingnachricht ist, die Dienstinformationen trägt,
wobei:
die erste Nachricht dazu konfiguriert ist, durch das erste Netzwerk übertragen zu werden, wenn bestimmt wird, dass die Endgerätvorrichtung (900) die Verbindung mit dem ersten Netzwerk herstellen muss,
USIM-1 der Endgerätvorrichtung (900) dem ersten Netzwerk entspricht und USIM-2 der Endgerätvorrichtung (900) einem zweiten Netzwerk entspricht;
sich die Endgerätvorrichtung (900) in einem Funkressourcensteuerungs-, RRC, verbundenen Zustand und/oder einem Verbindungsmanagement-, CM, verbundenen Zustand mit dem zweiten Netzwerk befindet, und
ob die Endgerätvorrichtung (900) die Verbindung mit dem ersten Netzwerk herstellen muss, dazu konfiguriert ist, durch das erste Netzwerk basierend auf einer ersten Richtlinie bestimmt zu werden, und die erste Richtlinie eine Dienstpriorität umfasst, wobei die Dienstpriorität einen Dienst, der erfordert, dass sich die Endgerätvorrichtung (900) mit dem ersten Netzwerk verbindet, oder einen Dienst, der nicht erfordert, dass sich die Endgerätvorrichtung (900) mit dem ersten Netzwerk verbindet, identifiziert, und
**dadurch gekennzeichnet, dass** alle oder ein Teil von Informationen der ersten Richtlinie von der Endgerätvorrichtung stammen, und die Verarbeitungseinheit (920) zu Folgendem konfiguriert ist:
Übertragen des Teils oder aller der Informationen in der ersten Richtlinie an das erste Netzwerk über eine Nichtzugriffsschicht-, NAS, Nachricht.

6. Endgerätvorrichtung (900) nach Anspruch 5, wobei die Dienstinformationen eine Dienstkennung umfassen, die einen Sprachdienst anzeigt.

7. Endgerätvorrichtung (900) nach Anspruch 5 oder 6, wobei die Verarbeitungseinheit (920) zu Folgendem konfiguriert ist:
Abbauen einer RRC-Verbindung und/oder einer CM-Verbindung mit dem zweiten Netzwerk während eines Herstellens der Verbindung mit dem ersten Netzwerk.

8. Endgerätvorrichtung (900) nach einem der Ansprüche 5-7, wobei die NAS-Nachricht eine Dienstanforderungsnachricht und/oder eine Registrierungsanforderungsnachricht umfasst.

9. Netzwerkvorrichtung, umfassend einen Prozessor und einen Speicher, wobei der Speicher dazu konfiguriert ist, ein Computerprogramm zu speichern, und der Prozessor dazu konfiguriert ist, das in dem Speicher gespeicherte Computerprogramm abzurufen und auszuführen, um das Verfahren nach Anspruch 4 durchzuführen.

## Revendications

1. Procédé de communication sans fil, mis en œuvre par un dispositif terminal qui prend en charge une pluralité de cartes de module d'identité d'abonné universel, USIM, le procédé comprenant :
la réception, par le dispositif terminal, d'un premier message émis par un premier réseau ; et
l'établissement, par le dispositif terminal, d'une connexion avec le premier réseau en réponse au premier message, dans lequel le premier message est un message de radiomessagerie acheminant des informations de service,
dans lequel :
le premier message est émis par le premier réseau lorsqu'il est déterminé que le dispositif terminal doit établir la connexion avec le premier réseau,
USIM-1 du dispositif terminal correspond au premier réseau et USIM-2 du dispositif terminal correspond à un second réseau ;
le dispositif terminal est dans un état connecté de contrôle des ressources radio, RRC, et/ou un état connecté de gestion de connexion, CM, avec le second réseau, et
le fait de savoir si le dispositif terminal doit établir la connexion avec le premier réseau est déterminé par le premier réseau sur la base d'une première politique, et la première politique comprend une priorité de service, dans lequel la priorité de service identifie un service qui requiert que le dispositif terminal se connecte au premier réseau ou un service qui ne requiert pas que le dispositif terminal se connecte au premier réseau,
**caractérisé en ce que**, tout ou partie des informations de la première politique proviennent du dispositif terminal, et le procédé comprend en outre : l'émission, par le dispositif terminal, de tout ou partie des informations dans la première politique au premier réseau par le biais d'un message de strate de non-accès, NAS.

2. Procédé selon la revendication 1, dans lequel les informations de service comprennent un identifiant de service qui indique un service vocal.

3. Procédé selon la revendication 1 ou 2, comprenant en outre :
la libération, par le dispositif terminal, d'une connexion RRC et/ou d'une connexion CM avec le second réseau pendant l'établissement de la connexion avec le premier réseau.

4. Procédé de communication sans fil, mis en œuvre par un premier réseau, comprenant :
la détermination, par le premier réseau, du fait qu'un dispositif terminal doit établir une connexion avec le premier réseau sur la base d'une première politique ; et
l'émission, par le premier réseau, d'un premier message au dispositif terminal, le premier message étant un message de radiomessagerie acheminant des informations de service,
dans lequel :
USIM-1 du dispositif terminal correspond au premier réseau et USIM-2 du dispositif terminal correspond à un second réseau ; et
le dispositif terminal est dans un état connecté de contrôle des ressources radio, RRC, et/ou un état connecté de gestion de connexion, CM, avec le second réseau, et
la première politique comprend une priorité de service, dans lequel la priorité de service identifie un service qui requiert que le dispositif terminal se connecte au premier réseau ou un service qui ne requiert pas que le dispositif terminal se connecte au premier réseau,
**caractérisé en ce que**, tout ou partie des informations de la première politique proviennent du dispositif terminal, les tout ou partie des informations dans la première politique sont reçues par le premier réseau depuis le dispositif terminal par le biais d'un message de strate de non-accès, NAS.

5. Dispositif terminal (900), prenant en charge une pluralité de cartes de module d'identité d'abonné universel, USIM, et comprenant ;
une unité de communication (910) configurée pour recevoir un premier message émis par un premier réseau ; et
une unité de traitement (920) configurée pour établir une connexion avec le premier réseau en réponse au premier message, dans lequel le premier message est un message de radiomessagerie acheminant des informations de service,
dans lequel :
le premier message est configuré pour être émis par le premier réseau lorsqu'il est déterminé que le dispositif terminal (900) doit établir la connexion avec le premier réseau,
USIM-1 du dispositif terminal (900) correspond au premier réseau et USIM-2 du dispositif terminal (900) correspond à un second réseau ;
le dispositif terminal (900) est dans un état connecté de contrôle des ressources radio, RRC, et/ou un état connecté de gestion de connexion, CM, avec le second réseau, et
le fait de savoir si le dispositif terminal (900) doit établir la connexion avec le premier réseau est configuré pour être déterminé par le premier réseau sur la base d'une première politique, et la première politique comprend une priorité de service, dans lequel la priorité de service identifie un service qui requiert que le dispositif terminal (900) se connecte au premier réseau ou un service qui ne requiert pas que le dispositif terminal (900) se connecte au premier réseau, et
**caractérisé en ce que**, tout ou partie des informations de la première politique proviennent du dispositif terminal, et l'unité de traitement (920) est configurée pour :
émettre les tout ou partie des informations dans la première politique au premier réseau par le biais d'un message de strate de non-accès, NAS.

6. Dispositif terminal (900) selon la revendication 5, dans lequel les informations de service comprennent un identifiant de service qui indique un service vocal.

7. Dispositif terminal (900) selon la revendication 5 ou 6, dans lequel l'unité de traitement (920) est configurée pour :
libérer une connexion RRC et/ou une connexion CM avec le second réseau pendant l'établissement de la connexion avec le premier réseau.

8. Dispositif terminal (900) selon l'une quelconque des revendications 5 à 7, dans lequel le message NAS comprend un message de demande de service et/ou un message de demande d'inscription.

9. Dispositif réseau, comprenant un processeur et une mémoire, dans lequel la mémoire est configurée pour stocker un programme informatique, et le processeur est configuré pour appeler et exécuter le programme informatique stocké dans la mémoire pour mettre en œuvre le procédé selon la revendication 4.
